# EUROPÄISCHE PATENTSCHRIFT

(11) **EP 2 830 903 B1**
(45) Veröffentlichungstag und Bekanntmachung des Hinweises auf die Patenterteilung: **24.10.2018**
(21) Anmeldenummer: 13703404.7
(22) Anmeldetag: 08.02.2013
(51) Int. Cl.: B60K 6/448, B60W 10/26, B60W 10/06, B60W 10/08, B60W 20/00, B60K 6/52, B60W 50/08

(54) **VERFAHREN UND REGELUNGSEINRICHTUNG ZUR REGELUNG EINES HYBRIDANTRIEBS EINES HYBRIDELEKTRISCHEN KRAFTFAHRZEUGS**
METHOD AND REGULATING DEVICE FOR REGULATING A HYBRID DRIVE OF A HYBRID ELECTRIC MOTOR VEHICLE
PROCÉDÉ ET SYSTÈME DE RÉGLAGE DE LA PROPULSION HYBRIDE D'UN VÉHICULE À MOTORISATION HYBRIDE ÉLECTRIQUE

(30) Priorität: 27.03.2012 DE 102012204849
(43) Veröffentlichungstag der Anmeldung: 04.02.2015
(73) Patentinhaber: Robert Bosch GmbH, 70442 Stuttgart (DE)
(72) Erfinder: MAASS, Alexander, 71636 Ludwigsburg (DE); KIESER, Joerg, 74321 Bietigheim-Bissingen (DE); ROESCH, Alexander, 71636 Ludwigsburg (DE)
(86) Internationale Anmeldenummer: PCT/EP2013/052566
(87) Internationale Veröffentlichungsnummer: WO 2013/143742

(56) Entgegenhaltungen:
- EP-A2- 1 393 951
- WO-A1-2011/125184
- WO-A2-2007/074367
- US-A1- 2011 166 733

## Beschreibung

Die Erfindung betrifft ein Verfahren zur Regelung eines Hybridantriebs eines hybridelektrischen Kraftfahrzeugs.

### Stand der Technik

Ein derartiges Verfahren zur Regelung eines Hybridantriebs eines hybridelektrischen Kraftfahrzeugs ist aus dem gattungsbildenden Dokument US 2011/0166733 A1 bekannt.

Die DE 10 2006 008 640 A1 beschreibt ein Hybridfahrzeug mit zwei Antriebsaggregaten. Als erstes Antriebsaggregat weist das dort beschriebene Hybridfahrzeug eine Brennkraftmaschine auf, als zweites Antriebsaggregat weist das Hybridfahrzeug eine elektrische Maschine auf. Bei dem dort beschriebenen Verfahren wird die Brennkraftmaschine aus dem Betriebsmodus des Hybridantriebes mittels eines starterlosen Direktstarts angelassen.

Dadurch ist es mit dem dort beschriebenen Verfahren möglich, mit stehendem Verbrennungsmotor und alleine durch den elektrischen Antrieb das Hybridfahrzeug zu bewegen.

### Offenbarung der Erfindung

Die Erfindung schafft ein Verfahren zur Regelung eines Hybridantriebs eines hybridelektrischen Kraftfahrzeugs nach Patentanspruch 1.

Die vorliegende Erfindung schafft gemäß einem Aspekt ein Verfahren zur Regelung eines Hybridantriebs eines hybridelektrischen Kraftfahrzeugs, welches einen elektrischen Energiespeicher aufweist, mit den Schritten: Festlegen von Kriterien für ein Zuschalten des elektrischen Antriebs und/oder der Brennkraftmaschine anhand eines einstellbaren Fahrmodus, wobei durch eine änderbare Einstellung ein Anteil einer Batteriekapazität des elektrischen Energiespeichers vorbehalten wird, und Regeln des Zuschaltens des elektrischen Antriebs und/oder der Brennkraftmaschine des hybridelektrischen Kraftfahrzeugs durch die festgelegten Kriterien und durch die änderbare Einstellung.

Die vorliegende Erfindung schafft ferner gemäß einem Aspekt eine Regelungseinrichtung zur Regelung eines Hybridantriebs eines hybridelektrischen Kraftfahrzeugs, welches einen elektrischen Energiespeicher aufweist, wobei die Regelungseinrichtung ausgelegt ist, Kriterien für ein Zuschalten des elektrischen Antriebs und/oder der Brennkraftmaschine anhand eines einstellbaren Fahrmodus festzulegen, wobei durch eine änderbare Einstellung ein Anteil einer Batteriekapazität des elektrischen Energiespeichers vorbehalten wird, und das Zuschalten des elektrischen Antriebs und/oder der Brennkraftmaschine des hybridelektrischen Kraftfahrzeugs durch die festgelegten Kriterien und durch die änderbare Einstellung zu regeln.

### Vorteile der Erfindung

Die der vorliegenden Erfindung zugrunde liegende Idee ist es, die Verfügbarkeit einer elektrischen Antriebsunterstützung bei einem hybridelektrischen Kraftfahrzeug besser anzupassen.

Die folgenden Vorteile lassen sich durch die vorliegende Erfindung realisieren.

Die Erfindung ermöglicht bei einem Achshybrid, d.h. einem hybridelektrischen Kraftfahrzeug, bei welchem jeweils mindestens ein Antriebsaggregat auf je eine angetriebene Fahrzeugachse wirkt, den Einsatz des Allradantriebs an vorgegebene Anforderung besser anzupassen.

Vorteilhaft kann durch die der vorliegenden Erfindung zugrunde liegende Idee ein temporärer Allradantrieb mit annehmbaren Einsatzzeiten zur Verfügung gestellt werden, ohne dass zwingend eine generatorisch zu betreibende zweite elektrische Antriebseinheit erforderlich ist. Die Erfindung ermöglicht nach Bedarf eine maximale Antriebsleistung auf denjenigen Rädern, die nur mit einem elektrischen Antrieb bzw. elektrischen Antrieben gekoppelt sind.

Ferner erlaubt die vorliegende Erfindung im Fall einer Verwendung zweier elektrischer Antriebseinheiten den temporären Allradantrieb ohne einen generatorischen Betrieb der elektrischen Antriebseinheiten bereitzustellen. Somit wird eine erhöhte Antriebsleistung basierend auf dem Antriebsmoment aller Antriebsaggregate des hybridelektrischen Kraftfahrzeugs ermöglicht.

Die Erfindung bietet dem Fahrer verschiedene einstellbare Fahrmodi, die einen Antrieb des hybridelektrischen Kraftfahrzeugs entsprechend den gegebenen Anforderungen ermöglichen. Dabei soll bei einem Achshybrid mit einer E-Maschine der Allradantrieb des hybridelektrischen Kraftfahrzeugs möglichst bedarfsgerecht verfügbar gemacht werden.

Gemäß einer Ausführungsform wird der elektrische Antrieb des hybridelektrischen Kraftfahrzeugs als ein zuschaltbarer elektrischer Antrieb des hybridelektrischen Kraftfahrzeugs ausgelegt, welcher einen Allradantrieb des hybridelektrischen Kraftfahrzeugs ermöglicht. Dies ermöglicht eine angepasste Fahrweise des hybridelektrischen Kraftfahrzeugs.

Gemäß einer weiteren Ausführungsform wird als eines der Kriterien für das Zuschalten des elektrischen Antriebs und/oder der Brennkraftmaschine ein durch eine Sensorvorrichtung ermittelter Bedarf für eine Erhöhung einer Traktion des hybridelektrischen Kraftfahrzeugs verwendet.

Gemäß einer weiteren Ausführungsform wird der einstellbare Fahrmodus vom Fahrer aus einer Vielzahl von Fahrmodi ausgewählt.

Gemäß einer weiteren Ausführungsform wird als der Anteil der Batteriekapazität des elektrischen Energiespeichers, welcher für einen motorischen Betrieb einer ersten elektrischen Antriebseinheit und/oder einer zweiten elektrische Antriebseinheit vorbehalten wird, ein Prozentsatz von 0 Prozent oder von bis zu 30 Prozent oder von bis zu 70 Prozent oder von bis zu 100 Prozent der Batteriekapazität des elektrischen Energiespeichers verwendet. Dies ermöglicht vorteilhaft, die Verfügbarkeitsdauer des Allradantriebs des hybridelektrischen Kraftfahrzeugs entsprechend den gegebenen Anforderungen zu beeinflussen.

Gemäß einer weiteren Ausführungsform erzwingt der einstellbare Fahrmodus einen motorischen Betrieb einer ersten elektrischen Antriebseinheit. Dies ermöglicht eine Verbesserung des Fahrverhaltens des hybridelektrischen Kraftfahrzeugs.

Gemäß einer weiteren Ausführungsform wird eine Verfügbarkeit eines Allradantriebs basierend auf dem für den elektrischen Antrieb vorbehaltenen Anteil der Batteriekapazität des elektrischen Energiespeichers angezeigt.

Gemäß einer weiteren Ausführungsform wird neben der Verfügbarkeit ferner eine voraussichtliche Verfügbarkeitsdauer des Allradantriebs angezeigt.

Gemäß einer weiteren Ausführungsform wird der vorzuhaltende Anteil der Batteriekapazität des elektrischen Energiespeichers anhand von Sensordaten ermittelt.

Gemäß einer weiteren Ausführungsform weist der elektrische Antrieb lediglich eine elektrische Antriebseinheit auf.

### Kurze Beschreibung der Zeichnungen

Weitere Merkmale und Vorteile der vorliegenden Erfindung werden nachfolgend anhand von Ausführungsformen mit Bezug auf die Figuren erläutert.

Es zeigen:
- Fig. 1: eine Darstellung eines Flussdiagramms eines Verfahrens zur Regelung eines Hybridantriebs eines hybridelektrischen Kraftfahrzeugs gemäß einer ersten Ausführungsform der vorliegenden Erfindung;
- Fig. 2: eine schematische Darstellung zur Erläuterung einer Regelungseinrichtung zur Regelung eines Hybridantriebs eines hybridelektrischen Kraftfahrzeugs gemäß einer zweiten Ausführungsform der vorliegenden Erfindung; und
- Fig. 3: eine schematische Darstellung zur Erläuterung einer Regelungseinrichtung zur Regelung eines Hybridantriebs eines hybridelektrischen Kraftfahrzeugs gemäß einer dritten Ausführungsform der vorliegenden Erfindung.

### Ausführungsformen der Erfindung

In den Figuren bezeichnen gleiche Bezugszeichen gleiche oder funktionsgleiche Elemente, sofern nichts Gegenteiliges angegeben ist.

Die beiliegenden Zeichnungen sollen ein weiteres Verständnis der Ausführungsformen der Erfindung vermitteln. Sie veranschaulichen Ausführungsformen und dienen im Zusammenhang mit der Beschreibung der Erklärung von Prinzipien und Konzepten der Erfindung. Andere Ausführungsformen und viele der genannten Vorteile ergeben sich im Hinblick auf die Zeichnungen. Die Elemente der Zeichnungen sind nicht notwendigerweise maßstabsgetreu zueinander gezeigt.

Unter dem Begriff "hybridelektrisches Kraftfahrzeug" wird im Folgenden ein Hybridelektrokraftfahrzeug oder ein Elektrofahrzeug verstanden, das von mindestens einem Elektromotor und einem weiteren Energiewandler angetrieben wird und die Energie aus einem Betriebskraftstofftank und einer Speichereinrichtung für elektrische Energie bezieht.

Beispielsweise kann dies ein Vollhybridfahrzeug, ein Plug-in-Hybridfahrzeug oder ein sonstiges Fahrzeug mit Hybridantrieb umfassen.

Mit dem Ausdruck "elektrischer Antrieb" ist im Folgenden eine elektrische Antriebsunterstützung bezeichnet, wie beispielsweise ein zusätzlicher Elektroantrieb mit einem oder mehreren Elektromotoren zur Unterstützung des Antriebsmoments eines Verbrennungsmotors oder einer Brennkraftmaschine.

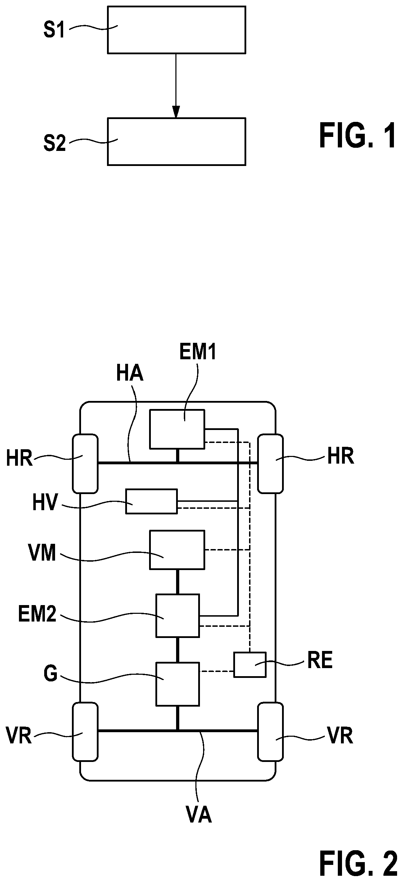

Die Figur 1 zeigt eine Darstellung eines Flussdiagramms eines Verfahrens zur Regelung eines Hybridantriebs eines hybridelektrischen Kraftfahrzeugs gemäß einer ersten Ausführungsform der vorliegenden Erfindung.

In einem ersten Schritt des Verfahrens erfolgt ein Festlegen S1 von Kriterien für ein Zuschalten eines elektrischen Antriebs EM1 und/oder der Brennkraftmaschine VM anhand eines einstellbaren Fahrmodus, wobei durch eine änderbare Einstellung ein Anteil einer Batteriekapazität eines elektrischen Energiespeichers HV für den elektrischen Antrieb vorbehalten wird.

In einem zweiten Schritt des Verfahrens erfolgt ein Regeln S2 des Zuschaltens des elektrischen Antriebs EM1 und/oder der Brennkraftmaschine VM des hybridelektrischen Kraftfahrzeugs durch die festgelegten Kriterien und durch die änderbare Einstellung.

Beispielsweise wird als eines der Kriterien für ein Zuschalten des elektrischen Antriebs EM1 und/oder der Brennkraftmaschine VM ein erhöhter Bedarf an Traktion für das hybridelektrische Kraftfahrzeug verwendet, wobei die Brennkraftmaschine VM und der elektrischen Antrieb EM1 zum Antrieb des hybridelektrischen Kraftfahrzeugs eingeschaltet sind.

Beispielsweise wird als eines der Kriterien für ein Zuschalten des elektrischen Antriebs EM1 und/oder der Brennkraftmaschine VM ein erhöhter Bedarf an Verfügbarkeitsdauer des Allradantriebs des hybridelektrischen Kraftfahrzeugs verwendet, wobei die Brennkraftmaschine VM zum Antrieb des hybridelektrischen Kraftfahrzeugs eingeschaltet ist und der elektrischen Antrieb EM1 generatorisch betrieben wird.

Beispielsweise wird als eines der Kriterien für ein Zuschalten des elektrischen Antriebs EM1 und/oder der Brennkraftmaschine VM ein kraftstoffoptimaler Betrieb des hybridelektrischen Kraftfahrzeugs verwendet, wobei die Brennkraftmaschine VM ausgeschaltet ist und der elektrischen Antrieb EM1 motorisch oder generatorisch betrieben wird.

Beispielsweise wird als einstellbarer Fahrmodus ein erster Fahrmodus "Eco" verwendet, bei dem die gesamte Batteriekapazität des elektrischen Energiespeichers HV für eine kraftstoffoptimale Betriebsartenauswahl des Antriebs des hybridelektrischen Kraftfahrzeugs verwendet wird.

Bei diesem Fahrmodus kann in einigen Fällen, beispielsweise nach längerer, rein elektrischer Fahrt des hybridelektrischen Kraftfahrzeugs, der Ladezustand des elektrischen Energiespeichers HV so gering sein, dass bei einem Achshybrid ein Allradantrieb des hybridelektrischen Kraftfahrzeugs nicht mehr möglich oder nur in geringem Umfang möglich ist, auch wenn beispielsweise aufgrund des Fahrzustands auf einem unerwartet rutschigen Straßenbelag ein Allradantrieb vorteilhaft wäre. Vorteilhaft bei diesem Fahrmodus ist der geringe Kraftstoffverbrauch.

In einem zweiten Fahrmodus "Standard" wird nur ein Teil, beispielsweise 70 % der nutzbaren Batteriekapazität des elektrischen Energiespeichers HV für eine kraftstoffoptimale Betriebsartenauswahl verwendet, d.h. beispielsweise in Phasen mit geringer Gaspedalanforderung fährt das hybridelektrische Kraftfahrzeug rein elektrisch, bis der elektrische Energiespeicher HV noch mindestens 30 % seiner Gesamtkapazität aufweist. Dann startet aber die Brennkraftmaschine VM wieder, um den elektrischen Energiespeicher HV aufzuladen, beispielsweise auf 100 %. Es bleibt damit 30 % der Batterieladung des elektrischen Energiespeichers HV für den Allradantrieb reserviert. Auf diese Weise hat der elektrischen Energiespeichers HV zu jedem Zeitpunkt mindestens 30 % seiner Ladung verfügbar, um Allradantrieb zu ermöglichen.

Dieser Anteil reicht beispielsweise für eine Einschaltdauer von etwa 10 Sekunden Allradantrieb aus. Der Allradantrieb wird jedoch immer nur bedarfsweise zugeschaltet, d.h. wenn der Untergrund, auf dem das hybridelektrische Kraftfahrzeug fährt, rutschig ist und/oder die Räder einer Fahrzeugachse durchdrehen oder sich in einem Fahrbereich mit nur noch geringer Traktion befinden, wie beispielsweise von einer Antriebsschlupfregelung oder einer Traktionskontrolle erfasst.

Während des Allradantriebs wird der elektrische Energiespeicher HV entladen und die verbleibende Verfügbarkeitsdauer des Allradantriebs sinkt, aber nachdem der Bedarf für Allradantrieb wieder wegfällt, wird der elektrische Energiespeicher HV wieder mindestens so weit geladen, dass wieder 10 Sekunden Allradantrieb-Verfügbarkeitsdauer für den Allradantrieb verfügbar sind. In diesem Fahrmodus ist also vorgesehen, die Allradantrieb-Verfügbarkeitsdauer auf mindestens 10 Sekunden zu halten. In dem Fahrmodus "Standard" ist der Kraftstoffverbrauch etwas höher als im Fahrmodus "Eco".

Bei einem dritten Fahrmodus, beispielsweise als "Prio-Allrad" Modus bezeichnet, wird der elektrische Energiespeicher HV so schnell wie möglich vollgeladen und während der Weiterfahrt des hybridelektrischen Kraftfahrzeugs nicht mehr oder nur noch minimal durch sonstige elektrische Verbraucher des hybridelektrischen Kraftfahrzeugs entladen. Beispielsweise kann ein zusätzliches 12-Volt-Bordnetz primär durch einen konventionellen 12-Volt-Generator oder eine herkömmliche Lichtmaschine geladen werden, ohne auf die im elektrischen Energiespeicher HV gespeicherte Energie zurückzugreifen. In diesem Fahrmodus kann der Kraftstoffverbrauch höher sein als bei Fahrmodi "Standard" oder "Eco", dafür steht bei Bedarf für eine längere Verfügbarkeitsdauer, beispielsweise von einer Minute, Allradantrieb zur Verfügung.

Um den Fahrer über die Allrad-Verfügbarkeitsdauer zu informieren, kann eine Anzeige veranschaulichen, wie viel Allradantrieb zur Verfügung steht, beispielsweise mit einer farblicher Codierung einer Anzeigenleuchte oder mit einer alphanummerischen Anzeige der geschätzten Allrad-Verfügbarkeitsdauer in Sekunden.

Bei einem optionalen vierten Fahrmodus, beispielsweise als "Force Allrad"-Modus bezeichnet, kann das Aufladen des elektrischen Energiespeichers HV analog zu dem Aufladen des elektrischen Energiespeichers HV im "Prio Allrad" Modus erfolgen. Nach Wahl dieses Fahrmodus wird der Allradantrieb nicht mehr bedarfsgerecht, sondern zwingend gewählt.

Ein Fahrmodus kann per Default aktiv sein. Alternativ kann ein Fahrmodus erst nach aktiver Auswahl durch den Fahrer gewählt werden. Oder eine Regelungseinrichtung RE kann einen Fahrmodus anhand eines Fahrzustands des hybridelektrischen Kraftfahrzeugs oder anhand von durch eine Sensorvorrichtung erfassten Umwelteinflüssen auswählen, welche beispielsweise die vorherrschende Traktion beeinflussen, wie beispielsweise Niederschlag oder die Außentemperatur.

Prinzipiell ist die Nutzung beliebiger Informationen zur Festlegung des Fahrmodus denkbar, beispielsweise kann bei einer dem hybridelektrischen Kraftfahrzeug vorausliegender Steigung oder beim Befahren einer Offroad-Strecke ein erhöhter Anteil der Batterieladung für den Allradantrieb reserviert werden oder es kann ein entsprechender Fahrmodus gewählt werden.

Es ist auch denkbar, den bedarfsgerechten Allradantrieb in einem rein elektrischen Kraftfahrzeug einzusetzen, wenn eine der Achsen durch eine als Hauptantriebsmaschine ausgelegte erste elektrische Antriebseinheit EM1 angetrieben wird, und die andere Achse durch eine als Hilfsantrieb ausgelegte zweite elektrische Antriebseinheit EM2 angetrieben wird.

So wird im Regelfall die Hauptantriebsmaschine allein für den Vortrieb des hybridelektrischen Kraftfahrzeugs genutzt. Die zweite elektrische Antriebseinheit EM2 unterstützt die Hauptantriebsmaschine bedarfsgerecht, d.h. wenn der Untergrund rutschig ist und die Räder der anderen Achse durchdrehen oder drohen, durchzudrehen.

Es sei erwähnt, dass das die in Figur 1 gezeigten Verfahrensschritte in beliebiger Weise, beispielsweise rekursiv oder iterativ, wiederholt werden können.

Die Figur 2 zeigt eine schematische Darstellung zur Erläuterung einer Regelungseinrichtung zur Regelung eines Hybridantriebs eines hybridelektrischen Kraftfahrzeugs gemäß einer zweiten Ausführungsform der vorliegenden Erfindung.

Beispielsweise wird der vorbehaltene Anteil der Batteriekapazität des elektrischen Energiespeichers HV für einen motorischen Betrieb der ersten elektrischen Antriebseinheit EM 1 vorbehalten.

Beim dem hybridelektrische Kraftfahrzeug ist eine erste angetriebene Fahrzeugachse HA, ausgebildet, welche von einer ersten elektrischen Antriebseinheit EM1 angetrieben wird. Die erste elektrische Antriebseinheit EM1 ist beispielsweise an die erste angetriebene Fahrzeugachse HA gekoppelt.

Das hybridelektrische Kraftfahrzeug weist eine zweite angetriebene Fahrzeugachse VA auf, welche über eine Getriebeeinrichtung G von einer zweiten elektrischen Antriebseinheit EM2 und von einer Brennkraftmaschine VM angetrieben wird. Die Brennkraftmaschine VM ist beispielsweise über die zweite elektrische Antriebseinheit EM2 und die Getriebeeinrichtung G an die zweite angetriebene Fahrzeugachse VA gekoppelt.

Die erste angetriebene Fahrzeugachse HA ist beispielsweise als Hinterachse ausbildet und an ihr sind Hinterrädern HR angeordnet. Die zweite angetriebene Fahrzeugachse VA ist beispielsweise als Vorderachse ausbildet und an ihr sind Vorderräder VR angeordnet. Die erste angetriebene Fahrzeugachse HA und die zweite angetriebene Fahrzeugachse VA sind beispielsweise als permanente Antriebsachsen oder als zuschaltbare Antriebsachsen des hybridelektrischen Kraftfahrzeugs ausgebildet.

Das hybridelektrische Kraftfahrzeug weist einen elektrischen Energiespeicher HV auf. Der elektrische Energiespeicher HV ist beispielsweise als Kondensator, als Akkumulator, insbesondere als Lithium-Ionen-Akkumulator, als Lithium-Polymer-Akkumulator, als Lithium-Schwefel-Akkumulator oder als Lithium-Eisen-Phosphat-Akkumulator oder als eine sonstige galvanische Zelle ausgeführt.

Eine Regelungseinrichtung RE ist beispielsweise mit der Getriebeeinrichtung G, der ersten elektrischen Antriebseinheit EM1, der zweiten elektrische Antriebseinheit EM2, der Brennkraftmaschine VM, dem elektrischen Energiespeicher HV gekoppelt und ist dazu ausgelegt, Kriterien für ein Zuschalten der ersten elektrischen Antriebseinheit EM1 und/oder der Brennkraftmaschine VM anhand des einstellbaren Fahrmodus festzulegen.

Beispielsweise wird ein Allradantrieb des hybridelektrischen Kraftfahrzeugs mit der ersten elektrischen Antriebseinheit EM1 und der zweiten elektrische Antriebseinheit EM2 ermöglicht. Ebenso kann der Allradantrieb des hybridelektrischen Kraftfahrzeugs mittels der Brennkraftmaschine VM und der ersten elektrischen Antriebseinheit EM1 erreicht werden.

Die Regelungseinrichtung RE ist beispielsweise als eine speicherprogrammierbare Steuerung oder als ein sonstiges Gerät ausgeführt, das zur Steuerung oder Regelung einer Maschine oder Anlage eingesetzt wird und auf digitaler Basis programmiert wird.

Die Regelungseinrichtung RE ist beispielsweise zur Verarbeitung von Sensordaten eines oder mehrere Sensoren ausgelegt, um mittels der Sensordaten den vorzuhaltenden Anteil der Batteriekapazität des elektrischen Energiespeichers zu ermitteln. Beispielsweise werden als Sensordaten Daten eines Regensensors, Navigationsdaten eines Navigationssystems, Daten über Fahrzeugparameter oder sonstige Daten von der Regelungseinrichtung RE verarbeitet, aus denen sich ein zukünftiger Bedarf der Traktion des hybridelektrischen Kraftfahrzeugs ermitteln lässt.

Beispielsweise könnte die Regelungseinrichtung RE des hybridelektrischen Kraftfahrzeugs bei einem Betrieb des Scheibenwischers in kleinster Stufe einen Anteil der Batteriekapazität ausreichend für 10 Sekunden Allradantrieb reservieren, bei einem Betrieb des Scheibenwischers in höchster Stufe einen Anteil der Batteriekapazität ausreichend für 20 Sekunden Allradantrieb, und bei einer vorherrschenden Außentemperatur unter +5°C einen Anteil der Batteriekapazität ausreichend für 30 Sekunden Allradantrieb.

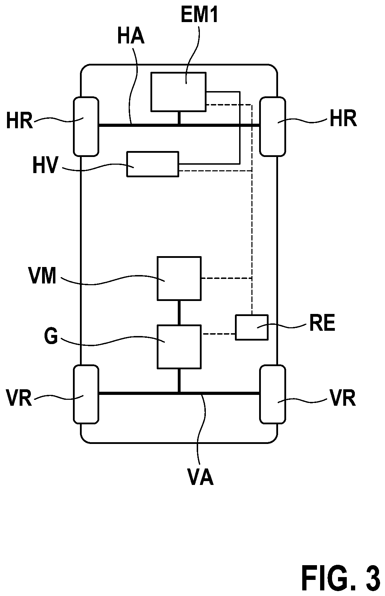

Die Figur 3 zeigt eine schematische Darstellung zur Erläuterung einer Regelungseinrichtung zur Regelung eines Hybridantriebs eines hybridelektrischen Kraftfahrzeugs gemäß einer dritten Ausführungsform der vorliegenden Erfindung.

Der elektrische Antrieb des hybridelektrischen Kraftfahrzeugs kann die erste elektrische Antriebseinheit EM1 und/oder die zweite elektrische Antriebseinheit EM2 umfassen. In der Figur 3 ist ein Ausführungsbeispiel mit nur einer elektrischen Antriebseinheit EM1 als elektrischer Antrieb dargestellt.

Durch das erfindungsgemäße Verfahren kann ein temporärer Allradantrieb mit hinreichend langen Einsatzzeiten zur Verfügung gestellt werden, da ein Prozentsatz von 0 Prozent oder von bis zu 30 Prozent oder von bis zu 70 Prozent oder von bis zu 100 Prozent der Batteriekapazität des elektrischen Energiespeichers HV für den temporärer Allradantrieb vorgehalten wird, so dass eine beim Allradantrieb generatorisch betriebene zweite elektrische Antriebseinheit EM2 nicht erforderlich ist. Dies erlaubt eine kostengünstige Realisierung des Antriebs des hybridelektrischen Kraftfahrzeugs.

In den Figuren 2 und 3 sind Pulswechselrichter oder Wechselrichter oder sonstige Geräte zum Umrichten der von dem elektrischen Energiespeicher HV bereitgestellten Gleichspannung in die von den elektrischen Antriebseinheiten EM1, EM2 benötigte Wechselspannung nicht dargestellt.

Beispielsweise umfasst jede der elektrischen Antriebseinheiten EM1, EM2 je einen Pulswechselrichter und je eine oder mehrere elektrische Maschinen, die elektrische Energie in mechanische Energie umwandeln.

Es ist jedoch ebenso denkbar, Pulswechselrichter oder Wechselrichter oder sonstige Geräte zum Umrichten der Gleichspannung räumlich getrennt von den elektrischen Antriebseinheiten EM1, EM2 vorzusehen.

Die weiteren in der Figur 3 verwendeten Bezugszeichen sind bereits in der zu der Figur 2 zugehörigen Figurenbeschreibung erläutert.

Obwohl die vorliegende Erfindung anhand bevorzugter Ausführungsbeispiele beschrieben wurde, ist sie darauf nicht beschränkt. Insbesondere sind die genannten Ausführungsformen und Verfahrensabläufe nur beispielhaft und nicht auf die erläuterten Beispiele beschränkt. Die beschriebenen Ausgestaltungen und Weiterbildungen lassen sich, sofern sinnvoll, beliebig miteinander kombinieren.

## Patentansprüche

1. Verfahren zur Regelung eines Hybridantriebs eines hybridelektrischen Kraftfahrzeugs mit Allradantrieb, welches einen elektrischen Energiespeicher (HV) aufweist, und ein Festlegen (S1) von Kriterien für ein Zuschalten des elektrischen Antriebs (EM1; EM1, EM2) und/oder der Brennkraftmaschine (VM) anhand eines einstellbaren Fahrmodus ausgeführt wird, wobei durch eine änderbare Einstellung ein Anteil einer Batteriekapazität des elektrischen Energiespeichers (HV) vorbehalten wird,
**dadurch gekennzeichnet, dass**
ein Regeln (S2) des Zuschaltens des elektrischen Antriebs (EM1; EM1, EM2) und/oder der Brennkraftmaschine (VM) des hybridelektrischen Kraftfahrzeugs durch die festgelegten Kriterien und durch die änderbare Einstellung ausgeführt wird, um einen temporären Allradantrieb mit hinreichend langen Einsatzzeiten zur Verfügung zu stellen.

2. Verfahren nach Anspruch 1, wobei der elektrische Antrieb (EM1; EM1, EM2) des hybridelektrischen Kraftfahrzeugs als ein zuschaltbarer elektrischer Antrieb des hybridelektrischen Kraftfahrzeugs ausgelegt wird, welcher einen Allradantrieb des hybridelektrischen Kraftfahrzeugs ermöglicht.

3. Verfahren nach einem der Ansprüche 1 und 2, wobei als eines der Kriterien für das Zuschalten des elektrischen Antriebs (EM1; EM1, EM2) und/oder der Brennkraftmaschine (VM) ein durch eine Sensorvorrichtung ermittelter Bedarf für eine Erhöhung einer Traktion des hybridelektrischen Kraftfahrzeugs verwendet wird.

4. Verfahren nach einem der Ansprüche 1-3, wobei der einstellbare Fahrmodus vom Fahrer aus einer Vielzahl von Fahrmodi ausgewählt wird.

5. Verfahren nach einem der Ansprüche 1-4, wobei als der Anteil der Batteriekapazität des elektrischen Energiespeichers (HV), welcher für einen motorischen Betrieb einer ersten elektrischen Antriebseinheit EM1 und/oder einer zweiten elektrische Antriebseinheit EM2 vorbehalten wird, ein Prozentsatz von 0 Prozent oder von bis zu 30 Prozent oder von bis zu 70 Prozent oder von bis zu 100 Prozent der Batteriekapazität des elektrischen Energiespeichers (HV) verwendet wird.

6. Verfahren nach einem der Ansprüche 1-5, wobei der einstellbare Fahrmodus einen motorischen Betrieb einer ersten elektrischen Antriebseinheit EM1 erzwingt.

7. Verfahren nach einem der Ansprüche 1-6, wobei eine Verfügbarkeit eines Allradantriebs basierend auf dem vorbehaltenen Anteil der Batteriekapazität des elektrischen Energiespeichers (HV) angezeigt wird.

8. Verfahren nach Anspruch 7, wobei neben der Verfügbarkeit ferner eine voraussichtliche Verfügbarkeitsdauer des Allradantriebs angezeigt wird.

9. Verfahren nach einem der Ansprüche 1-8, wobei der elektrischen Antrieb (EM1; EM1, EM2) lediglich eine elektrische Antriebseinheit (EM1) aufweist.

10. Verfahren nach einem der Ansprüche 1-9, wobei der vorzuhaltende Anteil der Batteriekapazität des elektrischen Energiespeichers (HV) anhand von Sensordaten ermittelt wird.

11. Verfahren nach Anspruch 10, wobei die Sensordaten Daten eines Regensensors, Navigationsdaten eines Navigationssystems, Daten über Fahrzeugparameter oder sonstige Daten von der Regelungseinrichtung (RE) sind, aus denen sich ein zukünftiger Bedarf der Traktion des hybridelektrischen Kraftfahrzeugs ermitteln lässt.

12. Verfahren nach einem der Ansprüche 1-11, wobei die Verfügbarkeitsdauer des Allradantriebs des hybridelektrischen Kraftfahrzeugs entsprechend den gegebenen Anforderungen beeinflusst wird.

13. Verfahren nach einem der Ansprüche 1-12, wobei bei einem Achshybrid mit einer E-Maschine (EM1, EM2) der Allradantrieb des hybridelektrischen Kraftfahrzeugs möglichst bedarfsgerecht verfügbar gemacht wird.

14. Verfahren nach einem der Ansprüche 1-13 , wobei bei einem Achshybrid, d. h. einem hybridelektrischen Kraftfahrzeug, bei welchem jeweils mindestens ein Antriebsaggregat (EM1, EM2, VM) auf je eine angetriebene Fahrzeugachse (VA, HA) wirkt, der Einsatz des Allradantriebs an vorgegebene Anforderung besser angepasst wird.

15. Verfahren nach einem der Ansprüche 1-14, wobei Räder (VR, HR) nur mit einem elektrischen Antrieb (EM1, EM2) bzw. elektrischen Antrieben (EM1, EM2) gekoppelt sind.

## Claims

1. Method for regulating a hybrid drive of a hybrid electric motor vehicle with all-wheel drive which has an electric energy store (HV), and criteria for actuating the electric drive (EM1; EM1, EM2) and/or the internal combustion engine (VM) are defined (S1) on the basis of an adjustable driving mode, wherein a portion of a battery capacity of the electric energy store (HV) is reserved by means of a variable setting,
**characterized in that**
the actuation of the electric drive (EM1; EM1, EM2) and/or of the internal combustion engine (VM) of the hybrid electric motor vehicle is regulated (S2) by means of the defined criteria and by means of the variable setting, in order to make available a temporary all-wheel drive with sufficiently long use times.

2. Method according to Claim 1, wherein the electric drive (EM1; EM1, EM2) of the hybrid electric motor vehicle is configured as an actuable electric drive of the hybrid electric motor vehicle which permits all-wheel drive of the hybrid electric motor vehicle.

3. Method according to one of Claims 1 and 2, wherein a demand, determined by a sensor device, for an increase in the traction of the hybrid electric motor vehicle is used as one of the criteria for the actuation of the electric drive (EM1; EM1, EM2) and/or of the internal combustion engine (VM).

4. Method according to one of Claims 1-3, wherein the adjustable driving mode is selected from a plurality of driving modes by the driver.

5. Method according to one of Claims 1-4, wherein a percentage of zero percent or of up to 30 percent or of up to 70 percent or of up to 100 percent of the battery capacity of the electric energy store (HV) is used as the portion of the battery capacity of the electric energy store (HV) which is reserved for a motor mode of a first electric drive unit (EM1) and/or of a second electric drive unit (EM2).

6. Method according to one of Claims 1-5, wherein the adjustable driving mode forcibly brings about a motor mode of a first electric drive unit EM1.

7. Method according to one of Claims 1-6, wherein availability of all-wheel drive is indicated on the basis of the reserved portion of the battery capacity of the electric energy store (HV).

8. Method according to Claim 7, wherein in addition to the availability an anticipated availability period of the all-wheel drive is also displayed.

9. Method according to one of Claims 1-8, wherein the electric drive (EM1; EM1, EM2) has only one electric drive unit (EM1).

10. Method according to one of Claims 1-9, wherein the portion of the battery capacity of the electric energy store (HV) which is to be reserved is determined on the basis of sensor data.

11. Method according to Claim 10, wherein the sensor data are data from a rain sensor, navigation data from a navigation system, data relating to vehicle parameters or other data from the regulating device (RE), from which a future demand for traction by the hybrid electric motor vehicle can be determined.

12. Method according to one of Claims 1-11, wherein the availability period of the all-wheel drive of the hybrid electric motor vehicle is influenced in accordance with the given requirements.

13. Method according to one of Claims 1-12, wherein, in the case of an axle hybrid with an e-machine (EM1, EM2), the all-wheel drive of the hybrid electric motor vehicle is made available as far as possible in accordance with demand.

14. Method according to one of Claims 1-13, wherein, in the case of an axle hybrid, that is to say a hybrid electric motor vehicle in the case of which in each case at least one drive assembly (EM1, EM2, VM) acts on in each case one driven vehicle axle (VA, HA), the use of the all-wheel drive is better adapted to a predefined request.

15. Method according to one of Claims 1-14, wherein wheels (VR, HR) are coupled only to an electric drive (EM1, EM2) or electric drives (EM1, EM2).

## Revendications

1. Procédé de régulation d'un groupe propulseur hybride d'un véhicule automobile hybride électrique à transmission intégrale, lequel possède un accumulateur d'énergie électrique (HV), et une définition (S1) de critères pour une mise en circuit du groupe propulseur électrique (EM1 ; EM1, EM2) et/ou du moteur à combustion interne (VM) est effectuée au moyen d'un mode de conduite réglable, une part d'une capacité de batterie de l'accumulateur d'énergie électrique (HV) étant gardée en réserve par un réglage modifiable,
**caractérisé en ce que**
une régulation (S2) de la mise en circuit du groupe propulseur électrique (EM1 ; EM1, EM2) et/ou du moteur à combustion interne (VM) du véhicule automobile hybride électrique est effectuée par les critères définis et par le réglage variable afin de mettre à disposition une transmission intégrale temporaire avec des temps d'utilisation suffisamment longs.

2. Procédé selon la revendication 1, le groupe propulseur électrique (EM1 ; EM1, EM2) du véhicule automobile hybride électrique étant conçu comme un groupe propulseur électrique du véhicule automobile hybride électrique pouvant être mis en circuit, lequel permet une transmission intégrale du véhicule automobile hybride électrique.

3. Procédé selon l'une des revendications 1 et 2, l'un des critères utilisés pour la mise en circuit du groupe propulseur électrique (EM1 ; EM1, EM2) et/ou du moteur à combustion interne (VM) étant un besoin déterminé par un dispositif de détection pour une augmentation d'une traction du véhicule automobile hybride électrique.

4. Procédé selon l'une des revendications 1 à 3, le mode de conduite réglable étant sélectionné par le conducteur parmi une pluralité de modes de conduite.

5. Procédé selon l'une des revendications 1 à 4, la part de la capacité de batterie de l'accumulateur d'énergie électrique (HV) qui est gardée en réserve pour un fonctionnement moteur d'une première unité de propulsion électrique (EM1) et/ou d'une deuxième unité de propulsion électrique (EM2) étant un pourcentage de 0 pourcent jusqu'à 30 pourcents ou jusqu'à 70 pourcents ou jusqu'à 100 pourcents de la capacité de batterie de l'accumulateur d'énergie électrique (HV).

6. Procédé selon l'une des revendications 1 à 5, le mode de conduite réglable forçant un fonctionnement moteur d'une première unité de propulsion électrique (EM1).

7. Procédé selon l'une des revendications 1 à 6, une disponibilité d'une transmission intégrale étant affichée sur la base de la part de la capacité de batterie de l'accumulateur d'énergie électrique (HV) qui est gardée en réserve.

8. Procédé selon la revendication 7, une durée de disponibilité probable de la transmission intégrale étant affichée en plus de la disponibilité.

9. Procédé selon l'une des revendications 1 à 8, le groupe propulseur électrique (EM1 ; EM1, EM2) possédant seulement une unité de propulsion électrique (EM1) .

10. Procédé selon l'une des revendications 1 à 9, la part de la capacité de batterie de l'accumulateur d'énergie électrique (HV) à garder en réserve étant déterminée à l'aide de données de capteur.

11. Procédé selon la revendication 10, les données de capteur étant des données d'un capteur de pluie, des données de navigation d'un système de navigation, des données relatives à des paramètres du véhicule ou d'autres données du dispositif de régulation (RE), à partir desquelles il est possible de déterminer un futur besoin de traction du véhicule automobile hybride électrique.

12. Procédé selon l'une des revendications 1 à 11, la disponibilité de la transmission intégrale du véhicule automobile hybride électrique étant influencée conformément aux exigences données.

13. Procédé selon l'une des revendications 1 à 12, selon lequel, dans le cas d'un essieu hybride avec une machine électrique (EM1, EM2), la transmission intégrale du véhicule automobile hybride électrique est mise à disposition si possible en fonction du besoin.

14. Procédé selon l'une des revendications 1 à 13, selon lequel, dans le cas d'un essieu hybride, c'est-à-dire un véhicule automobile hybride électrique avec lequel au moins un groupe propulseur (EM1, EM2, VM) agit respectivement sur un essieu de véhicule propulsé (VA, HA) respectif, l'utilisation de la transmission intégrale est mieux adaptée à l'exigence prédéfinie.

15. Procédé selon l'une des revendications 1 à 14, des roues (VR, HR) n'étant accouplées qu'avec un groupe propulseur électrique (EM1, EM2) ou les groupes propulseurs électriques (EM1, EM2).
